# EUROPÄISCHE PATENTANMELDUNG

(11) **EP 2 803 331 A1**
(43) Veröffentlichungstag der Anmeldung: **19.11.2014**
(21) Anmeldenummer: 13167587.8
(22) Anmeldetag: 14.05.2013
(51) Int. Cl.: A61C 8/00

(54) **Dental-Implantatsystem**

(71) Anmelder: CPM Präzisionsdrehtechnik GmbH, 69493 Hirschberg (DE)
(72) Erfinder:
(74) Vertreter: Walkenhorst, Andreas

(57) **Zusammenfassung**

Ein Dental-Implantatsystem (1) mit einem zur Einbringung in einen Kieferknochen vorgesehenen ersten Implantat-Teil (2) und mit einem diesem zugeordneten, zur Anbringung eines Zahnersatzstücks oder einer Prothese vorgesehenen zweiten Implantat-Teil (4), wobei die Implantat-Teile (2, 4) über einen an eines der Implantat-Teile (2, 4) angeformten, in einen im anderen Implantat-Teil (2, 4) vorgesehenen ersten Aufnahmekanal (12) einschiebbaren Verbindungszapfen (10) mechanisch miteinander verbindbar sind, sowie mit einem in einen im den Verbindungszapfen (10) aufweisenden Implantat-Teil (2, 4) vorgesehenen zweiten Aufnahmekanal (22, 24) einschiebbaren Versteifungszapfen (20), soll im Hinblick auf die üblicherweise angestrebten langen Nutzungsdauern eine besonders hohe mechanische Stabilität und Belastbarkeit aufweisen. Dazu sind erfindungsgemäß eine Anzahl von endseitig am Verbindungszapfen (10) angeordneten, im montierten Zustand in eine innenseitig im ersten Aufnahmekanal (12) angeordnete umlaufende Rastnut (32) eingreifenden Spreizkrallen (30) vorgesehen, die durch den in den zweiten Aufnahmekanal (22, 24) eingeschobenen Versteifungszapfen (20) fixiert sind.

## Beschreibung

Die Erfindung betrifft ein Dental-Implantatsystem mit einem zur Einbringung in einen Kieferknochen vorgesehenen ersten Implantat-Teil und mit einem diesem zugeordneten, zur Anbringung eines Zahnersatzstücks oder einer Prothese vorgesehenen zweiten Implantat-Teil, wobei die Implantat-Teile über einen an eines der Implantat-Teile angeformten, in einen im anderen Implantat-Teil vorgesehenen ersten Aufnahmekanal einschiebbaren Verbindungszapfen mechanisch miteinander verbindbar sind, sowie mit einem in einen im den Verbindungszapfen aufweisenden Implantat-Teil vorgesehenen zweiten Aufnahmekanal einschiebbaren Versteifungszapfen.

Dentalimplantate sind in vielfältigen Formen bekannt. Sie werden üblicherweise anstelle eines extrahierten oder ausgefallenen Zahnes in den Kieferknochen eingesetzt, um dort nach einer Einheilphase von drei bis vier Monaten ein als Zahnersatz dienendes prothetisches Teil oder eine Krone zu halten. Dazu ist ein derartiges Dentalimplantat üblicherweise als geeignet geformter Metallkörper ausgebildet, wobei das Dentalimplantat üblicherweise durch Einschrauben an der vorgesehenen Stelle in den Kieferknochen eingesetzt wird. Das Dentalimplantat weist dabei in der Regel am apikalen Ende ein zumeist selbstschneidendes Schraubengewinde auf, mit welchem das Dentalimplantat in das entsprechend präparierte Implantatbett eingesetzt wird.

Um eine erleichterte Einbringung in den Patientenmund und insbesondere eine besonders weitgehende Vorbereitung der eigentlichen Prothese bei der Anbringung an das Implantat bereits im Vorfeld der Patientenbehandlung, im beispielsweise in einem zahntechnischen Labor, zu ermöglichen, können Dental-Implantatsysteme mehrteilig ausgeführt sein. Insbesondere kann dabei ein grundsätzlich zweiteiliger Aufbau vorgesehen sein, wobei das Dental-Implantatsystem ein erstes, zur Einbringung in den Kieferknochen vorgesehenes, auch als eigentliches Implantat oder Pfostenteil bezeichnetes Implantat-Teil und zusätzlich zu diesem ein zugeordnetes zweites, auch als Aufbauteil bezeichnetes zweites Implantat-Teil umfasst, an das wiederum das als Prothese oder dergleichen vorgesehene Zahnersatzstück anbringbar ist. Das erste Implantat-Teil oder Pfostenteil und ebenso das zweite Implantat-Teil oder Kopf- oder Aufbauteil bestehen üblicherweise aus Metall oder einer Keramik, und zwar insbesondere aus Titan, Zirkon, einer Titanlegierung, Zirkonlegierung, einer titanhaltigen Legierung, einer zirkonhaltigen Legierung, einer Zirkonoxid-Aluminiumoxid-Keramik oder einer Keramik, die entweder Zirkonoxid oder Aluminiumoxid beinhaltet oder mindestens eine der Keramiken als Hauptbestandteil aufweist. Darüber hinaus können Keramiken eingesetzt werden, die auf Silizium- oder Siliziumoxidbasis aufgebaut sind und z.B. Beimischungen von Stickstoff, Wasserstoff, Kohlenstoff oder Wolfram beinhalten.

Das erste Implantat-Teil oder Pfostenteil ist an seiner Außenseite üblicherweise mit einem Gewinde versehen, welches als selbstschneidendes oder auch als nicht selbstschneidendes Gewinde ausgeführt sein kann. Das Pfostenteil wird üblicherweise in einem entsprechend aufbereiteten Implantatbett des Kieferknochens verankert. Die Konstruktion des im Außenbereich des Dentalimplantats vorgesehenen Gewindes ist dabei üblicherweise für eine hohe Primärstabilität der Anordnung und eine gleichmäßige Weiterleitung der bei der Kaubelastung des Dentalimplantats auftretenden Kräfte in den Kieferknochen ausgelegt.

Zur mechanischen Verbindung der Implantat-Teile miteinander ist üblicherweise ein an eines der Implantat-Teile, in der Regel an das Aufbauteil, angeformter Verbindungszapfen vorgesehen. Dieser ist in einen im anderen Implantat-Teil, in der Regel im Pfostenteil, vorgesehenen Aufnahmekanal einschiebbar. Hinsichtlich Geometriewahl und Dimensionierung, insbesondere der Querschnitte, sind der Verbindungszapfen einerseits und der Aufnahmekanal andererseits dabei üblicherweise derart aneinander angepasst, dass bei vergleichsweise einfacher Montierbarkeit dennoch eine gute Führung der Bauteile ineinander und damit eine ausreichend hohe mechanische Stabilität erreichbar sind. Das Aufbauteil, das üblicherweise an seinem oberen Bereich mit einer Krone, einer anderen prothetischen Versorgung oder dergleichen in an sich bekannter Weise ausgestattet wird, wird dabei üblicherweise zur mechanischen Verbindung mit dem Pfostenteil mittels einer geeignet gewählten Verbindungsschraube mit dem Pfostenteil verschraubt, die innerhalb des in den Aufnahmekanal eingeschobenen Verbindungszapfens geführt ist. Bei der Einbringung wird dabei üblicherweise das Gewinde der Verbindungsschraube in ein zugeordnetes Innengewinde im Pfostenteil eingeschraubt. Der Schraubenkopf der Verbindungsschraube presst dabei beim Einschrauben über eine Stirnsenkung des Aufbauteils dieses auf das Dentalimplantat.

Allerdings liegt bei derartigen geschraubten Systemen die obere Kontaktfläche der Verbindungsschraube frei und zugänglich offen, so dass ein Abschluss des Systems beispielsweise gegenüber eindringenden Keimen oder Verunreinigungen möglicherweise nicht ausreichend erreichbar ist. Zudem begünstigt eine metallische Oberfläche wie beispielsweise die Oberfläche des Schraubenkopfs die Anhaftung von Plaque und dadurch bedingt weitere Anlagerungen, die zu unerwünschten Verunreinigungen führen können. Um derartige Beeinträchtigungen zu vermeiden, kann das Aufbauteil alternativ auch mit dem Pfostenteil verklebt sein. Das Aufbauteil kann aber auch in das Pfostenteil eingepresst werden und lediglich über eine Verklemmung fixiert werden, oder auch zusätzlich durch eine Zementierung oder Verklebung fixiert werden.

Bei derartigen geklebten oder verpressten Systemen kann gerade für die Ausgestaltung des Verbindungszapfens die Wahl eines vergleichsweise weichen Materials, beispielsweise auf Kunststoffbasis, wünschenswert sein, um damit unter Nutzung der Verformbarkeit des Materials eine besonders hohe Dichtigkeit des Systems und eine besonders gute geometrische Anpassung der Kontaktflächen der Komponenten aneinander unter Vermeidung von Punktkontakten und dergleichen zu ermöglichen. Um gerade bei einer derartigen Materialwahl aber auch eine besonders hohe mechanische Stabilität und Belastbarkeit des montierten Systems zu gewährleisten, ist aus der EP 2 428 180 A1 ein Dentalimplantat-System bekannt, bei dem im Bereich der Innenverbindung, also innerhalb des in den zugeordneten Aufnahmekanal im Pfostenteil eingeschobenen Verbindungszapfens des Aufbauteils, ein zusätzlicher, in einen im den Verbindungszapfen aufweisenden Implantat-Teil vorgesehenen zweiten Aufnahmekanal einschiebbarer Versteifungszapfen vorgesehen ist. Dieser kann aus einem vergleichsweise harten, mechanisch hoch festen und belastbaren Material gebildet sein, so dass über eine geeignete endseitige Lagerung des Versteifungszapfens einerseits im Pfostenteil und andererseits im Aufbauteil eine zuverlässige Kraftübertragung zwischen Aufbauteil und Pfostenteil über den Versteifungszapfen möglich ist. Damit ist eine kraftseitige Entlastung der eigentlichen Kontaktfläche am Verbindungszapfen ermöglicht, so dass diese Fläche hinsichtlich Materialwahl und dergleichen geeignet hinsichtlich anderer Optimierungsziele wie beispielsweise Dichtigkeit ausgelegt sein kann.

Der Erfindung liegt nun die Aufgabe zugrunde, das vorstehend beschriebene Implantatsystem noch weiter im Hinblick auf die üblicherweise angestrebten langen Nutzungsdauern und eine besonders hohe mechanische Stabilität und Belastbarkeit zu verbessern.

Diese Aufgabe wird erfindungsgemäß dadurch gelöst, dass endseitig am Verbindungszapfen angeordnet eine Anzahl von im montierten Zustand in eine innenseitig im ersten Aufnahmekanal angeordnete umlaufende Rastnut eingreifenden Spreizkrallen vorgesehen sind, die bei in den zweiten Aufnahmekanal eingeschobenem Versteifungszapfen durch diesen fixiert sind.

Vorteilhafte Ausgestaltungen der Erfindung sind Gegenstand der Unteransprüche.

Die Erfindung geht von der Überlegung aus, dass ausgehend von dem aus der EP 2 428 180 A1 bekannten Implantatsystem eine noch weiter verbesserte Last- und Kraftübertragung zwischen den Implantat-Teilen und eine verbesserte mechanische Stabilität des Systems insgesamt erreichbar ist, indem unter anderem auch die Formgebung der Komponenten im Verbindungsbereich geeignet gewählt wird. Insbesondere kann durch geeignet positionierte Hinterschneidungen im Verbindungsbereich eine Verrastung oder Verriegelung der Komponenten miteinander bewirkt werden, durch die ggf. auch Zugspannungen in den Verbindungszapfen eingebracht werden können, die ihrerseits die Stabilität des Gesamtsystems deutlich erhöhen.

Um dies zu ermöglichen, sind endseitig am Verbindungszapfen Spreizkrallen angeordnet, die in eine zugeordnete umlaufende Nut in der Innenoberfläche des Aufnahmekanals eingreifen können. Die Spreizkrallen sind dabei vorteilhafterweise derart räumlich gestaltet, dass sie im unbelasteten oder Ruhezustand stetig und kontinuierlich mit ihrer Außenfläche an die Außenfläche des Verbindungszapfens angrenzen, so dass sich insgesamt eine im Wesentlichen durchgängige Außenfläche des Systems aus eigentlichem Verbindungszapfen und den daran angeformten Spreizkrallen ergibt. Damit kann der Verbindungszapfen einschließlich der an ihm angeordneten Spreizkrallen bei der Montage der Komponenten unverändert einfach in den ihm zugeordneten ersten Aufnahmekanal eingeführt oder eingeschoben werden.

Für eine Fixierung des Systems wird anschließend der Versteifungszapfen in den ihm zugeordneten zweiten Aufnahmekanal im Inneren des Verbindungszapfens eingebracht. Die Spreizkrallen sind vorzugsweise mit in den zweiten Aufnahmekanal hineinragenden innenseitigen Verdickungen ausgeführt, die bei Einschieben des Versteifungszapfens in den zweiten Aufnahmekanal von der Außenfläche des Versteifungszapfens nach außen hin verdrängt oder weggedrückt werden. Damit werden die Spreizkrallen durch den in den Aufnahmekanal eingebrachten Versteifungszapfen nach außen hin aufgespreizt und verhaken sich dabei mit der zugeordneten Rastnut auf der Innenoberfläche des dem Verbindungszapfen zugeordneten ersten Aufnahmekanals. Somit werden die Spreizkrallen durch den in den Aufnahmekanal eingeschobenen Versteifungszapfen in ihrer in die Rastnut eingeschnappten Position fixiert. Damit wird der Verbindungszapfen in Längsrichtung des Systems gesehen im Aufnahmekanal festgelegt.

Vorteilhafterweise ist der Verbindungszapfen aus einem geeignet weichen, flexiblen oder federnden Material gebildet, so dass die vorgesehene Spreizfunktion der angeformten Spreizkrallen zuverlässig erfüllt werden kann.

Zur Herstellung der Spreizkrallen kann der Verbindungszapfen beispielsweise zunächst mit einer endseitig angeordneten innenseitig umlaufenden Ringwulst versehen werden, die anschließend segmentweise ausgefräst oder -geschnitten wird. Die verbleibenden Anteile bilden sodann die Spreizkrallen.

Üblicherweise bildet der Verbindungszapfen eine Längsrichtung aus, in der er bei der Montage der Komponenten in den ihm zugeordneten Aufnahmekanal eingeschoben wird. In besonders vorteilhafter Ausgestaltung ist der zweite, dem Versteifungszapfen zugeordnete Aufnahmekanal im Verbindungszapfen derart positioniert und angeordnet, dass er zentral und/oder mit seiner Längsrichtung parallel zur Längsrichtung des Verbindungszapfens in diesem angeordnet ist. In weiterer vorteilhafter Ausgestaltung sind der Versteifungszapfen dabei in im Wesentlichen zylindrischer Bauform und entsprechend der ihm zugeordnete zweite Aufnahmekanal als angepasster Hohlzylinder ausgeführt. Durch diese Bauweise ist auf besonders einfache Weise die beabsichtigte Aufspreizung und anschließende Fixierung der Spreizkrallen durch den eingeschobenen Versteifungszapfen erreichbar.

Hinsichtlich der Materialwahl sind die jeweiligen Komponenten, insbesondere die Implantat-Teile, vorteilhafterweise im Hinblick auf eine hohe Langzeitstabilität gerade im vorgesehenen Einsatzumfeld und auch im Hinblick auf besonders gute Verträglichkeit und BioKompatibilität geeignet gewählt. Für die Implantat-Teile wird dabei vorteilhafterweise eine Keramik, insbesondere Zirkonoxid oder Aluminiumoxid, verwendet, jedenfalls als Hauptbestandteil, wodurch ein metallfreier Grundkörper bereitgestellt wird. Alternativ dazu können auch Zirkonium, eine andere Keramik, oder Titan verwendet werden. Diese Materialien können auch miteinander kombiniert werden. In alternativer vorteilhafter Ausgestaltung kann auch, je nach Anpassung an individuelle Bedürfnisse oder Vorgaben, ein hochbelastbarer thermoplastischer Kunststoff aus der Gruppe der Polyetherketone für eines oder beide der Implantat-Teile verwendet werden, insbesondere Polyetheretherketon, auch als PEEK bekannt. Derartige Materialien zeichnen sich durch ihre hervorragende Biokompatibilität aus und ermöglichen eine bakterienresistente und insbesondere stoffschlüssige Verbindung zwischen den Implantat-Teilen. Für den Versteifungszapfen wird vorteilhafterweise eine Keramik, vorzugsweise Zirkonoxid oder Aluminiumoxid, Titan oder eine Titanlegierung als Grundstoff verwendet.

Für die dauerhafte Verbindung zwischen den Implantat-Teilen eignen sich unterschiedliche Techniken. Besonders vorteilhaft werden die Implantat-Teile miteinander verpresst und/oder verklebt oder zementiert, so dass eine stoffschlüssige Verbindung entsteht.

Um eine zuverlässige mechanische Verbindung zwischen den Implantat-Teilen bei hoher Dichtigkeit zu ermöglichen, weist der Verbindungszapfen vorteilhafterweise im Querschnitt eine an die Kontur des zugeordneten Aufnahmekanals angepasste Außenkontur auf. In Längsrichtung von Verbindungszapfen oder Aufnahmekanal gesehen können beide zudem in weiterer vorteilhafter Ausgestaltung konisch ausgeführt sein, so dass sich auf besonders einfache Weise ein guter Kraftschluss bei hoher Dichtigkeit erzielen lässt. Gerade in Kombination mit der Rastnut und den in diese eingreifenden Rast- oder Schnapphaken ist dadurch eine besonders hohe Gesamtstabilität des Systems erreichbar, da aufgrund der konischen Kanalform einerseits und der durch die eingerasteten Schnapphaken mit der Rastnut gebildete Hinterschneidung andererseits in Längsrichtung des Verbindungszapfens gesehen eine zuverlässige formschlüssige Fixierung des Verbindungszapfens im Aufnahmekanal gewährleistet werden kann.

In weiterer vorteilhafter Ausgestaltung weist die Außenkontur des Verbindungszapfens - und entsprechend daran angepasst der Aufnahmekanal in seiner Innenkontur - im Querschnitt eine mehrzählige Symmetrie auf. Damit ist einerseits in der Art einer Indizierung auf einfache Weise eine zuverlässige rotatorische Ausrichtung des Aufbauteils bei der Montage, also bei der Einbringung in den Patientenmund, erreichbar, wobei andererseits in der Art eines rotatorischen Gesperres selbst bei der Einleitung hoher Drehmomente in das System die gewählte rotatorische Ausrichtung in der Zahnumgebung zuverlässig erhalten bleibt.

Die mit der Erfindung erzielten Vorteile bestehen insbesondere darin, dass durch das Konzept der Fixierung der in die Rastnut eingreifenden Spreizkrallen über den eingeschobenen Versteifungszapfen auf besonders einfache und zuverlässige Weise eine hohe mechanische Stabilität der Verbindung der beiden Implantat-Teile miteinander möglich ist. Diese mechanisch hochstabile Verbindung ist zudem in gewissem Umfang - bei aus dem Aufnahmekanal entnommenem Versteifungszapfen -wieder lösbar, so dass im Bedarfsfall auch ein Austausch einzelner Komponenten denkbar ist.

Ein Ausführungsbeispiel der Erfindung wird anhand einer Zeichnung näher erläutert. Darin zeigen:
- FIG. 1: ein Dental-Implantatsystem in Seitenansicht,
- FIG. 2: ein Aufbauteil des Dental-Implantatsystems nach FIG. 1 in Seitenansicht,
- FIG. 3: ein Pfostenteil des Dental-Implantatsystem nach FIG. 1 in perspektivischer Ansicht,
- FIG. 4: einen Versteifungszapfen,
- FIG. 5, 6: jeweils das Dental-Implantatsystem nach FIG. 1 im Längsschnitt, und
- FIG. 7: eine Explosionszeichnung des Dental-Implantatsystems nach FIG. 1.

Gleiche Teile sind in allen Figuren mit denselben Bezugszeichen versehen.

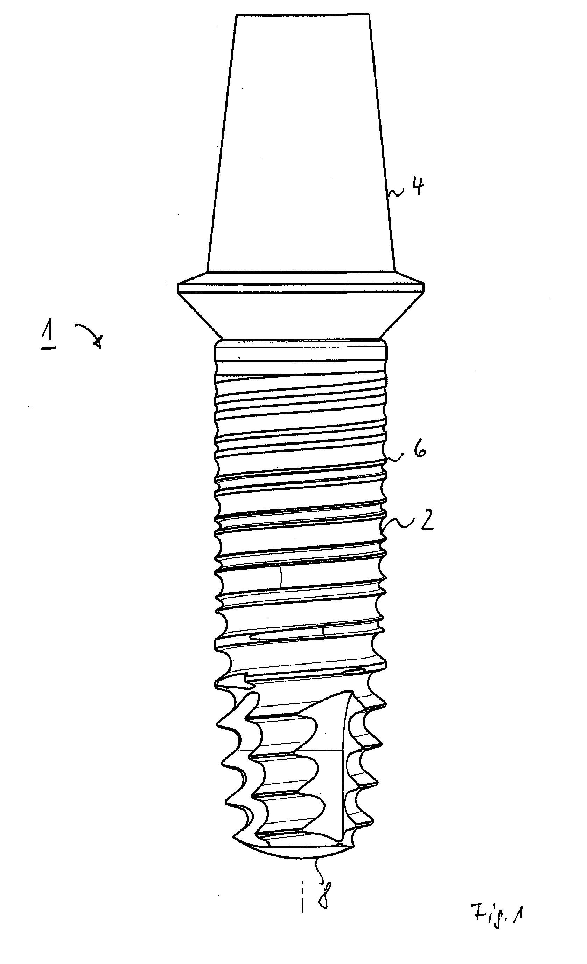

Das Dental-Implantatsystem 1 gemäß FIG. 1 ist zum Einsatz in den Kieferknochen anstelle eines extrahierten oder ausgefallenen Zahnes vorgesehen, um dort ein als Zahnersatz dienendes prothetisches Teil oder eine Krone zu halten. Das Dental-Implantatsystem 1 ist dazu mehrteilig ausgeführt und umfasst ein als sogenanntes Pfostenteil ausgeführtes erstes Implantat-Teil 2 und ein diesem zugeordnetes, zur Anbringung eines Zahnersatzstücks vorgesehenes, auch als Aufbauteil oder Abutment bezeichnetes zweites Implantat-Teil 4. Das erste Implantat-Teil 2 oder Pfostenteil ist dabei außenseitig mit einem Außengewinde 6 versehen, das insbesondere am apikalen Ende 8 als selbstschneidendes Schraubengewinde ausgestaltet ist. Damit kann das erste Implantat-Teil 2 oder Pfostenteil durch Einschrauben an der vorgesehenen Stelle in den Kieferknochen eingesetzt werden.

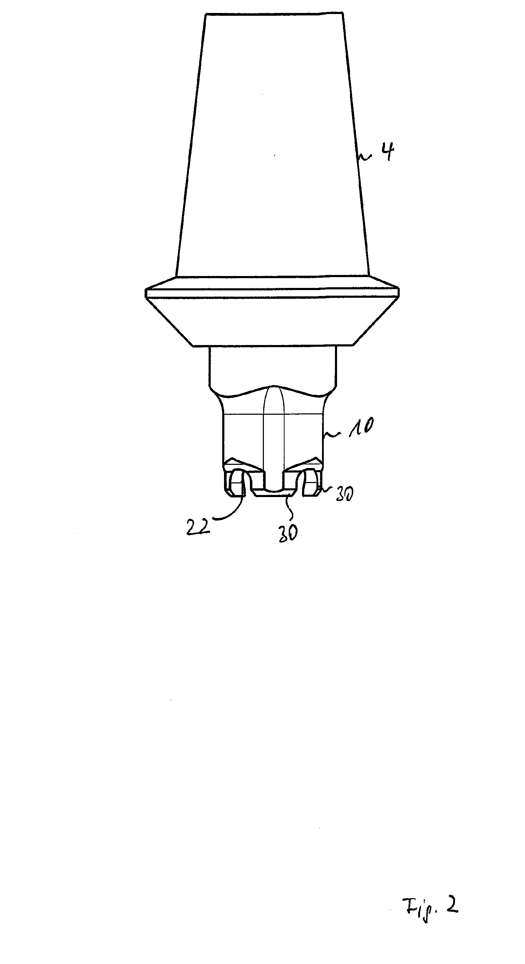

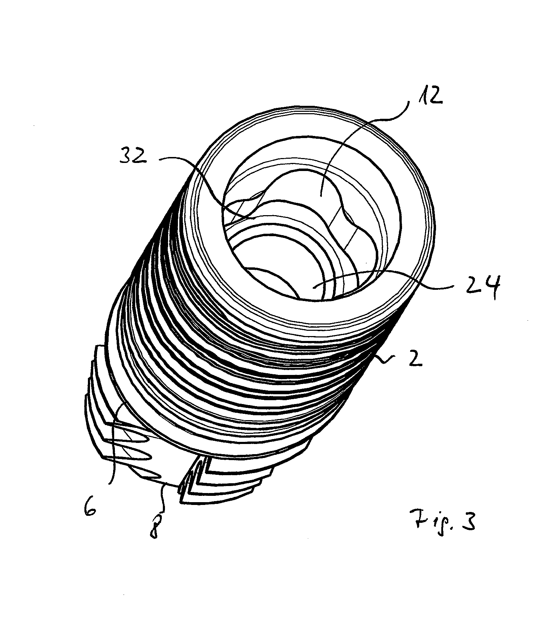

Um nach geeigneter Anbringung des Zahnersatzstücks oder der Prothese am Aufbauteil oder zweiten Implantat-Teil 4 ein Einbringen in das Pfostenteil oder erste Implantat-Teil 2 bei hoher mechanischer Stabilität zu ermöglichen, ist an das zweite Implantat-Teil 4 wie in FIG. 2 gezeigt ein Verbindungszapfen 10 angeformt, der in einen zugeordneten, im ersten Implantat-Teil 2 vorgesehenen ersten Aufnahmekanal 12 (vgl. Fig. 3) einschiebbar ist. Durch das Einschieben des Verbindungszapfens 10 in den ersten Aufnahmekanal 12 entsteht eine mechanische Verbindung der Implantat-Teile 2, 4 miteinander. Für eine hohe mechanische Stabilität ist dabei der Verbindungszapfen 10 in seiner Außenkontur an die Innenkontur des Aufnahmekanals 12 angepasst, wobei beide in Längsrichtung gesehen konisch geformt sein können. Zudem ist, wie dies insbesondere der perspektivischen Darstellung in Fig. 3 entnehmbar ist, die Außenkontur des Verbindungszapfens 10 und dem entsprechend angepasst die Innenkontur des ersten Aufnahmekanals 12 im Querschnitt mit einer mehrzähligen Symmetrie ausgestaltet, so dass beim Zusammenfügen der genannten Komponenten ein rotatorisches Gesperre entsteht und damit eine zuverlässige rotatorische Ausrichtung des Aufbauteils relativ zum Pfostenteil eingestellt werden kann.

Hinsichtlich ihrer Materialwahl sind die Implantat-Teile 2, 4 geeignet an den Einsatzzweck angepasst und grundsätzlich aus keramischem Material wie beispielsweise Zirkonoxid oder Aluminiumoxid gefertigt. Alternativ kann auch eines oder beide der Implantat-Teile 2, 4 aus Titan oder aus einem geeignet gewählten Material auf Titanbasis oder alternativ auch aus einem geeignet gewählten Kunststoff, insbesondere aus PEEK gefertigt sein.

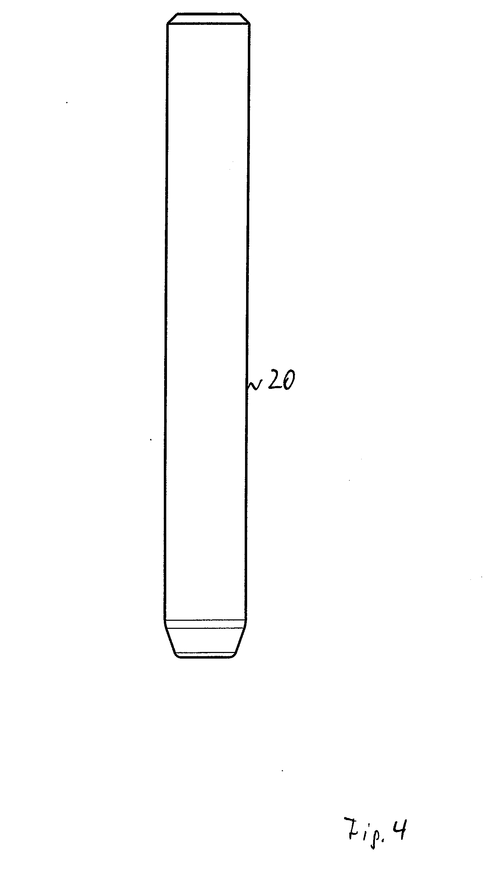

Das Dental-Implantatsystem 1 ist für eine besonders hohe mechanische Belastbarkeit bei hoher Dichtigkeit gegenüber möglicherweise eindringenden Keimen oder Verunreinigungen ausgelegt. Dazu ist im Verbindungsbereich von Verbindungszapfen 10 und erstem Aufnahmekanal 12 in der Art eines innenliegenden Stabilisierungselements ein mit im Wesentlichen zylindrischer Grundform ausgeführter Versteifungszapfen 20 vorgesehen, wie er in seitlicher Ansicht in Fig. 4 dargestellt ist. Der Versteifungszapfen 20 ragt im montierten Zustand sowohl in den Grundkörper des ersten Implantat-Teils 2 als auch in den Grundkörper des zweiten Implantat-Teils 4 hinein. Dazu weisen sowohl das erste Implantat-Teil 2 einen zweiten Aufnahmekanal 22 als auch das zweite Implantat-Teil 4 einen dritten Aufnahmekanal 24 auf, in dem der Versteifungszapfen 20 in montierten Zustand jeweils bündig geführt ist. Durch den Versteifungszapfen 20 ist somit auf besonders zuverlässige Weise eine Kräfteeinleitung vom zweiten Implantat-Teil 4 oder Aufbauteil in das erste Implantat-Teil 2 oder Pfostenteil sichergestellt, ohne dass der Verbindungs- oder Fügebereich zwischen diesen Teilen einer übermäßigen Belastung bei der Kräfteweiterleitung ausgesetzt wird.

Wie in Fig. 4 erkennbar ist, weist der Versteifungszapfen 20 eine im Wesentlichen zylindrische Grundform auf, so dass er auf besonders einfach Weise in die jeweiligen Aufnahmekanäle 22, 24 eingebracht werden kann. Im Ausführungsbeispiel ist der Versteifungszapfen 20 im Hinblick auf eine erwünschte besonders hohe Festigkeit ebenfalls aus Keramik, insbesondere aus Zirkonoxid oder Aluminiumoxid, hergestellt. Alternativ kann aber auch Titan oder eine Titanlegierung als Grundstoff für den Versteifungszapfen 20 vorgesehen sein. Ebenso sind Kombinationen aus den genannten Materialien oder ein Rückgriff auf andere geeignete Materialien mit einer ausreichend hohen mechanischen Festigkeit möglich. Gerade die Wahl eines keramischen Werkstoffs wie beispielsweise Zirkonoxid hat dabei den besonderen Vorteil, dass damit im Falle einer Dauerbelastung auf ein vergleichsweise weiches Abutment, beispielsweise ein PEEK-Abutment, der Versteifungszapfen 20 die Belastung in das Implantat oder Pfostenteil ableitet. Die zusätzliche Stabilität, die als Ausgleich für ein sich eventuell durchbiegendes PEEK-Abutment benötigt wird, wird in diesem Fall über das Pfostenteil oder erste Implantat-Teil 2 bereitgestellt, welches zu diesem Zweck aus einem ausreichend harten Material wie Titan oder Zirkonoxid bestehen sollte. Analog kann aber auch ein vergleichsweise weiches Pfostenteil, also beispielsweise ein erstes Implantat-Teil 2 aus PEEK, durch ein geeignet hart gewähltes Abutment oder zweites Implantat-Teil 4 aus Titan oder Zirkonoxid in Kombination mit dem keramischen Versteifungszapfen 20 stabilisiert werden.

Als besonders bevorzugt wird somit ein Materialverbund für das System aus erstem und zweitem Implantat-Teil 2, 4 sowie Versteifungszapfen 20 angesehen, bei dem der Versteifungszapfen 20 aus keramischem Material wie beispielsweise Zirkonoxid, zumindest eines der Implantat-Teile 2, 4 aus Kunststoff wie beispielsweise PEEK und ggf. das andere Implantat-Teil 2 bzw. 4 aus "hartem" Werkstoff, insbesondere aus Metall (wie beispielsweise Titan) oder einer Keramik, insbesondere aus Zirkonoxid, gebildet sind.

Das Dental-Implantatsystem 1 ist in besonderem Maße für eine mechanisch stabile und hochbelastbare Verbindung der Implantat-Teile 2, 4 miteinander ausgelegt. Dafür ist unter anderem zusätzlich zu ggf. vorgesehenen anderen Fügeverfahren, mit denen die Implantat-Teile 2, 4 zusammengefügt werden sollen, wie beispielsweise Kleben oder Verpressen, auch noch eine Verrastung oder Verriegelung der Implantat-Teile 2, 4 miteinander durch die gezielte Bereitstellung entsprechend gestalteter geometrischer Komponenten zur Bildung geeigneter Hinterschneidungen im montierten Zustand vorgesehen.

Im Ausführungsbespiel ist die Ausbildung einer derartigen Verrastung oder Verriegelung der Implantat-Teile 2, 4 miteinander dadurch vorgesehen, dass am an das Implantat-Teil 4 angeformten Verbindungszapfen 10 endseitig eine Anzahl von Spreizkrallen 30 angeordnet ist (vgl. FIG. 2). Die Spreizkrallen 30 greifen in montiertem Zustand, also bei in den ersten Aufnahmekanal 12 eingeschobenem Verbindungszapfen 10, in eine zugeordnete, innenseitig im ersten Aufnahmekanal 12 angeordnete umlaufende Rastnut 32 ein.

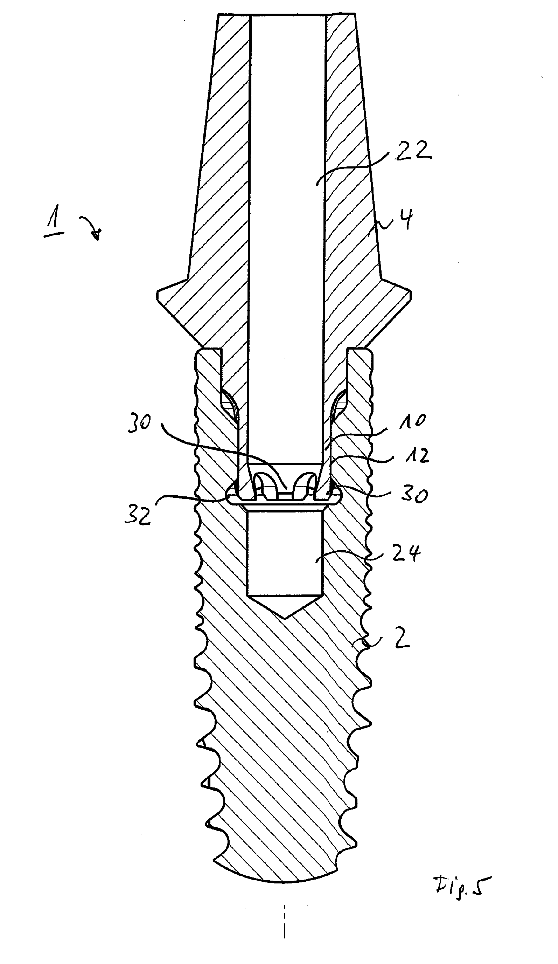

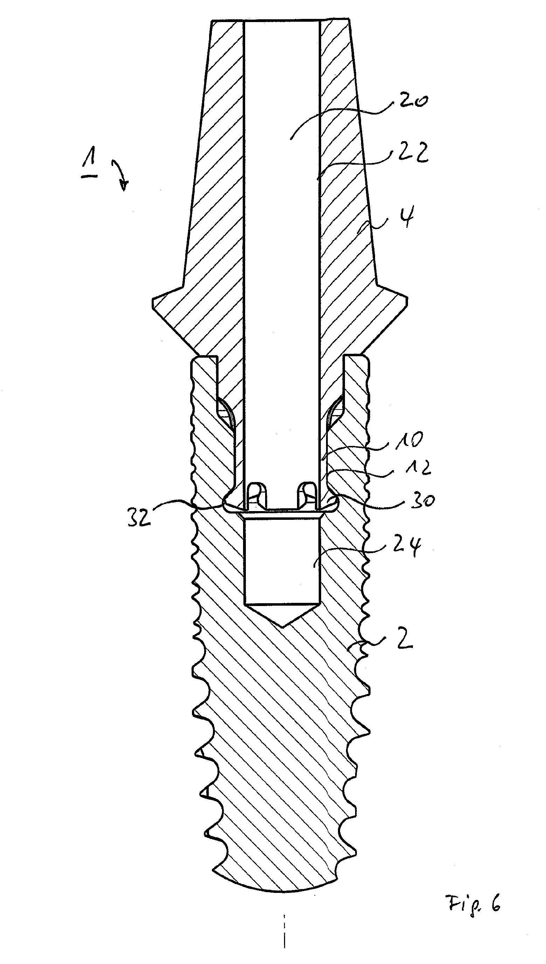

Die Wirkungsweise dieser Verriegelungselemente ist besonders deutlich aus den Darstellungen des Dental-Implantats 1 im Längsschnitt gemäß den Figuren 5 und 6 ersichtlich. FIG. 5 zeigt dabei die Implantat-Teile 2, 4 in vormontiertem Zustand, wobei der Verbindungszapfen 10 des Aufbauteils bereits in den ihm zugeordneten ersten Aufnahmekanal 12 im Pfostenteil eingeschoben ist, wobei der Versteifungszapfen 20 aber noch nicht montiert ist. Im Gegensatz dazu zeigt die Darstellung im Längsschnitt gemäß FIG. 6 das Dental-Implantat 1 in vollständig montiertem Zustand, also mit in den zweiten Aufnahmekanal 22 eingeschobenem Versteifungszapfen 20.

Wie der Darstellung gemäß FIG. 5 entnehmbar ist, ragt bei in den ersten Aufnahmekanal 12 eingeschobenem Verbindungszapfen 10 dieser mit seinem endseitigen Bereich, an dem die Spreizkrallen 30 angeformt sind, bis in die Höhe, in der sich benachbart auch die umlaufend innenseitig im ersten Aufnahmekanal 12 vorgesehene Rastnut 32 befindet. In diesem vormontierten Zustand liegt jedoch noch keine Verriegelung oder Verrastung der Implantat-Teile 2, 4 mit einander vor.

Im nachfolgenden Montageschritt, nach dessen Durchführung dass Dental-Implantat 1 im Längsschnitt in FIG. 6 gezeigt ist, ist jedoch der Versteifungszapfen 20 in den Aufnahmekanal 22 vollständig eingeschoben. Durch die Geometriewahl und die Vorgabe der entsprechenden Parameter ist dabei sichergestellt, dass der annähernd zylinderförmige Außenmantel des Versteifungszapfens 20 bündig mit der Innenoberfläche des zweiten Aufnahmekanals 22 abschließt. Im endseitigen Bereich des Verbindungszapfen 10, in dem der zweite Aufnahmekanal 22 durchgängig in den Außenbereich weitergeführt ist, so dass sich ein "offenes Ende" des zweiten Aufnahmekanals 22 bildet, drückt der Versteifungszapfen 20 hingegen die an ihrer Innenseite mit einer entsprechenden, nach innen verlaufenen Abschrägung oder Verdickung versehenen Spreiznasen 30 über seine zylinderförmige Außenfläche nach außen. Wie der Darstellung in FIG. 6 entnehmbar ist, resultiert dies in einem Aufspreizen der Spreiznasen 30 nach außen hin, so dass sie mit ihrer äußeren Kontur in die umlaufende Rastnut 32 eingreifen. Auf diese Weise ist erreicht, das durch den in den zweiten Aufnahmekanal 22 eingeschobenen Versteifungszapfen 20 und das daraus resultierende Aufspreizen der Spreiznasen 30 nach außen hin eine Verrastung oder Verriegelung der Implantat-Teile 2, 4 miteinander entsteht. Ein Zurückweichen der Spreiznasen 30 nach innen hin zur Freigabe dieser Verriegelung ist ausgeschlossen, solange sich der Versteifungszapfen 20 entsprechend eingeschoben im zweiten Aufnahmekanal 22 befindet. Damit fixiert der Versteifungszapfen 20 die Spreiznasen 30 in der Verriegelungsposition, also im Eingriff mit der Rastnut 32.

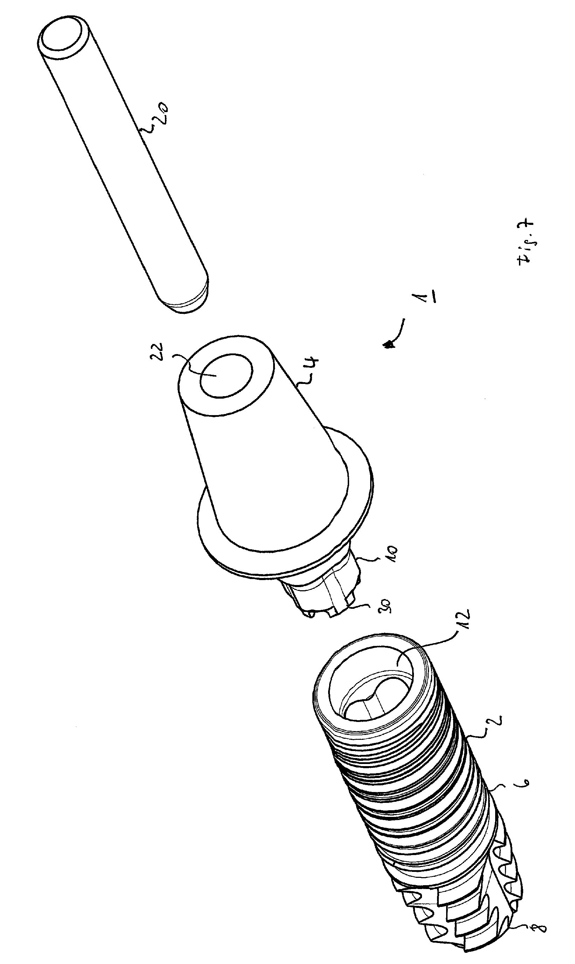

Das Zusammenwirken der genannten Teile wird ebenso auch aus der Explosionsdarstellung gemäß FIG. 7 deutlich.

**Bezugszeichenliste**

| | |
|---|---|
| 1 | Dental-Implantatsystem |
| 2 | erstes Implantat-Teil |
| 4 | zweites Implantat-Teil |
| 6 | Außengewinde |
| 8 | apikales Ende |
| 10 | Verbindungszapfen |
| 12 | Aufnahmekanal |
| 20 | Versteifungszapfen |
| 22 | Aufnahmekanal |
| 24 | Aufnahmekanal |
| 30 | Spreizkralle |
| 32 | Rastnut |

## Patentansprüche

1. Dental-Implantatsystem (1) mit einem zur Einbringung in einen Kieferknochen vorgesehenen ersten Implantat-Teil (2) und mit einem diesem zugeordneten, zur Anbringung eines Zahnersatzstücks oder einer Prothese vorgesehenen zweiten Implantat-Teil (4), wobei die Implantat-Teile (2, 4) über einen an eines der Implantat-Teile (2, 4) angeformten, in einen im anderen Implantat-Teil (2, 4) vorgesehenen ersten Aufnahmekanal (12) einschiebbaren Verbindungszapfen (10) mechanisch miteinander verbindbar sind, sowie mit einem in einen im den Verbindungszapfen (10) aufweisenden Implantat-Teil (2, 4) vorgesehenen zweiten Aufnahmekanal (22, 24) einschiebbaren Versteifungszapfen (20), **gekennzeichnet durch** eine Anzahl von endseitig am Verbindungszapfen (10) angeordneten, im montierten Zustand in eine innenseitig im ersten Aufnahmekanal (12) angeordnete umlaufende Rastnut (32) eingreifenden Spreizkrallen (30), die **durch** den in den zweiten Aufnahmekanal (22, 24) eingeschobenen Versteifungszapfen (20) fixiert sind.

2. Dental-Implantatsystem (1) nach Anspruch 1, dessen zweiter Aufnahmekanal (22, 24) zentral und parallel zur Längsrichtung des jeweiligen Implantat-Teils (2, 4) in diesem angeordnet ist.

3. Dental-Implantatsystem (1) nach Anspruch 1 oder 2, dessen Versteifungszapfen (20) eine im Wesentlichen zylindrische Form aufweist.

4. Dental-Implantatsystem (1) nach einem der Ansprüche 1 bis 3, bei dem zumindest eines der Implantat-Teile (2, 4) aus einem keramischen Grundstoff, vorzugsweise aus Zirkonoxid oder Aluminiumoxid, hergestellt ist.

5. Dental-Implantatsystem (1) nach einem der Ansprüche 1 bis 4, bei dem zumindest eines der Implantat-Teile (2, 4) aus einem Kunststoff, vorzugsweise aus PEEK, hergestellt ist.

6. Dental-Implantatsystem (1) nach einem der Ansprüche 1 bis 5, dessen Versteifungszapfen (20) aus einem keramischen Grundstoff, vorzugsweise aus Zirkonoxid oder Aluminiumoxid, oder aus Titan oder aus einer Titanlegierung hergestellt ist.

7. Dental-Implantatsystem (1) nach einem der Ansprüche 1 bis 6, dessen Implantat-Teile (2, 4) durch Verklebung, Zementierung oder Verpressung miteinander verbunden sind.

8. Dental-Implantatsystem (1) nach einem der Ansprüche 1 bis 7, bei dem der Verbindungszapfen (10) im Querschnitt eine an die Kontur des zugeordneten Aufnahmekanals (12) angepasste Außenkontur aufweist.

9. Dental-Implantatsystem (1) nach Anspruch 8, bei dem die Außenkontur des Verbindungszapfens (10) im Querschnitt eine mehrzählige Symmetrie aufweist.
